# EUROPÄISCHE PATENTSCHRIFT

(11) **EP 2 311 725 B1**
(45) Veröffentlichungstag und Bekanntmachung des Hinweises auf die Patenterteilung: **06.08.2014**
(21) Anmeldenummer: 10163936.7
(22) Anmeldetag: 26.05.2010
(51) Int. Cl.: B63B 21/50, B63B 35/44

(54) **Schwimmfundament mit verbesserter Abspannung**
Floating support with improved bracing
Fondation flottante dotée d'un haubanage amélioré

(30) Priorität: 16.10.2009 DE 102009044278
(43) Veröffentlichungstag der Anmeldung: 20.04.2011
(73) Patentinhaber: GICON windpower IP GmbH, 01219 Dresden (DE)
(72) Erfinder: Jähnig, Jens, 01738 Dorfhain (DE)
(74) Vertreter: Kailuweit & Uhlemann Patentanwälte

(56) Entgegenhaltungen:
- EP-A1- 0 311 397
- WO-A1-98/55355
- WO-A2-2004/079146
- WO-A2-2006/038091
- GB-A- 1 293 668
- US-A- 2 399 656
- US-A- 3 086 368

## Beschreibung

Die Erfindung betrifft ein Schwimmfundament für seegestützte Windkraftanlagen.

Auf See zu errichtende Bauwerke bedürfen eines Fundaments, das tragfähig und standsicher ist. Dabei sind erhebliche Lasten zu berücksichtigen, die sowohl aus Wasserströmungen, Wellenbewegungen wie auch vom Wind resultieren können.

Zum Beispiel offenbart die GB 2378679 ein Schwimmtragwerk für eine Windkraftanlage. Das Schwimmtragwerk umfasst mehrere Schwimmkörper, die in Betrieb untergetaucht sind. Sie sind über ein Traggerüst miteinander verbunden, an dem zentrisch der Turm der Windkraftanlage angeordnet ist. Zur Verankerung sind Sauganker vorgesehen, mit denen das Schwimmtragwerk über Spannseile verbunden ist. Diese erstrecken sich im Wesentlichen vertikal von den Schwimmkörpern zu den Saugankern.

Ebenso offenbart die US 7,156,586 B2 ein Schwimmtragwerk für eine Windkraftanlage, wobei das Schwimmtragwerk Auftriebskörper aufweist, die über Spannseile mit am Meeresboden vorgesehenen Ankern verbunden ist. Wiederum sind die Spannseile im Wesentlichen senkrecht geführt.

Die EP 1 288 122 A2 offenbart ein weiteres Schwimmtragwerk, das durch Verankerungseile am Meeresboden gehalten ist. Die Verankerungsseile setzen an den äußeren Enden des Schwimmtragwerks an und gehen von dort vertikal nach unten oder schräg nach außen. Durch die Schrägseile wird eine gewisse Stabilisierung gegen seitliche Schwimmbewegungen des Schwimmtragwerks erzielt.

Die EP 1 876 093 A1 offenbart ein Schwimmtragwerk in Mischbauweise. Es enthält Betonhohlkörper und Stahlkörper und ist aus diesen zusammengesetzt. Zur Verankerung dienen vertikal nach unten zu Ankern laufende Spannseile, die an dem Schwimmtragwerk außen unterhalb seiner Schwimmkörper ansetzen.

Die DE 10 2005 036 679 A1 offenbart ein weiteres Schwimmtragwerk mit untergetauchten Auftriebskörpern und Spannseilen, die das Schwimmtragwerk an Ballastkörpern verankern. Die Spannseile erstrecken sich von den Schwimmkörpern im Wesentlichen vertikal nach unten bzw. schräg nach außen.

Besonderes Augenmerk auf die Verankerung eines Auftriebskörpers in Gestalt einer Trägerboje legt die DE 100 56 857 A1. An der äußeren Peripherie des Schwimmkörpers sind Verankerungsseile befestigt, die sich von dem Schwimmkörper schräg nach außen und nach unten erstrecken, wo sie an Rammpfahlankern oder auch an Rammpfahlankern und Ballastkörpern befestigt sind.

Eine ähnliche Schrägabspannung ist aus der US 3,082,608 A bekannt. Das dort beschriebene Schwimmtragwerk ist über schräg nach außen und unten verlaufende Ketten mit entsprechenden am Boden angeordneten Ankern verbunden.

Ähnlich versucht die US 4,702,321 eine schwimmende Ölplattform über schräg angeordnete Spannseile mit Rammpfahlankern zu verbinden.

Durch die Druckschrift US 2 399 656 A ist ein Schwimmfundament für seegestützte Bauwerke mit Schwimmkörpern für eine Plattform bekannt. Die Schwimmkörper tragen die Plattform und sind in verschiedenen Höhen gegenüber dem Meeresgrund fixierbar. Die Schwimmkörper sind untereinander und mit der Plattform über Spannmittel verbunden. Die Spannmittel bilden im Zusammenhang mit der Plattform, den Schwimmkörpern und Spannstäben ein Gittergerüst. Die Schwimmkörper sind mit ihren äußeren Randbereichen direkt miteinander verbunden. Weiterhin sind diese mit den jeweils nächstliegendem Anker verbunden. Damit ist bei Seegang ein Kippen der Plattform nicht auszuschließen.

Die Druckschrift GB 1 293 668 A beinhaltet ein hydrostatisches Gerüst mit einer Plattform. Das Gerüst besteht aus zumindest einem in ein Gewässer eintauchenden geschlossenen Hohlkörper sowie über dem Hohlkörper mittels starrer Verbindungsorgane abgestützter Plattform und Mittel zur Verankerung der Plattform auf dem Grund des Gewässers. Im wesentlichen ist dabei der Aufbau so getroffen, dass ein auf dem Wasser schwimmender Hohlkörper vorgesehen ist, der die zugeordnete Plattform trägt.

Dabei werden Trossen als Abspannmittel verwendet, wobei diese Anker und den Hohlkörper miteinander verbinden. Der Hohlkörper soll dabei unter der Wasseroberfläche verbleiben. Dabei kann sich zwischen mindestens vier Ballastblöcken als Anker und der Plattform jeweils mindestens drei Trossen befinden. Die Anker sind außerhalb des Querschnitts der Plattform angeordnet, da sich Trossen benachbarter Anker kreuzen. Gleichzeitig führen die Trossen den jeweils nächstliegenden Anschlussstellen des Hohlkörpers.
Ein Kippen der Plattform ist nicht auszuschließen.

Davon ausgehend ist es Aufgabe der Erfindung, ein Schwimmfundament mit verbesserter Abspannung zu schaffen.
Diese Aufgabe wird mit dem Schwimmfundament nach einem der Ansprüche 1-5 gelöst:

Das Schwimmfundament umfasst ein Schwimmtragwerk mit mehreren horizontal voneinander beabstandeten Anschlussstellen, von denen weg sich Abspannmittel, zum Beispiel Spannseile, erstrecken, die das Schwimmtragwerk mit mehren Ankern verbinden. Diese sind ortsfest in horizontalen Abständen zueinander am Meeresboden angeordnet. Die Anker sind vorzugsweise Ballastkörper, d.h. sogenannte Schwergewichtsfundamente.

Wenigstens einige der Abspannmittel verbinden jeweils einen im Wesentlichen unterhalb einer Anschlussstelle angeordneten Anker, mit einer fern liegenden Anschlussstelle. Das von den Ankern gebildete Polygon stimmt somit in Form und Größe mit einem von den Anschlussstellen definierten Polygon überein.

Wenigstens einige der Anschlussstellen sind jeweils mit fern liegenden Ankern verbunden. Das Schwimmtragwerk weist ein Zentrum auf, von dem ein zu der Windkraftanlage gehöriger Turm aufragt. Das Spannkonzept sieht nun vor, dass zumindest einige der Anschlussstellen an der Peripherie des Schwimmtragwerks angeordnet sind. Ebenso sind die Anker vorzugsweise unterhalb der Peripherie des Schwimmtragwerks angeordnet. Wenigstens einige der Abspannmittel, beispielsweise Spannseile, erstrecken sich von einer Anschlussstelle des Schwimmtragwerks ausgehend zu einem Anker, der jenseits des Zentrums des Schwimmtragwerks liegt. Dieser Anker wird als "fern liegender" Anker bezeichnet. Dieses Spannkonzept ermöglicht eine besonders steife Lagerung bzw. Abspannung des Schwimmtragwerks.

Der Steigungswinkel der schräg verlaufenden Seile wird minimiert. Zugleich wird die am Meeresboden von den Ankern umspannte oder umgrenzte Fläche auf das gleiche Maß begrenzt wie der Flächenbedarf des Schwimmtragwerks selbst. Dadurch können benachbarte Schwimmtragwerke relativ eng beieinander aufgestellt werden. Außerdem ergibt sich durch den Umstand, dass Spannseile oder sonstige Spannmittel jeweils zu dem "jenseitigen" Anker geführt sind, bei einer Windbelastung des Bauwerks eine günstige Abstützung der Windlasten. Die infolge von Wind und Wetter, Strömung und sonstigen Lasten auftretenden Turmschwankungen können weitgehend minimiert werden. Ebenso können seitliche Schwimmbewegungen minimiert werden, wodurch benachbarte Anlagen ihre Abstände verhältnismäßig präzise einhalten können.

Vorzugsweise sind die Anschlussstellen an dem Schwimmtragwerk an den Ecken eines Polygons angeordnet. Das Polygon kann im einfachsten Falle ein Dreieck sein. Beispielsweise weist das Schwimmtragwerk innere und äußere Anschlussstellen auf. Die äußeren sind vorzugsweise vertikal oberhalb der Anker und wiederum vorzugsweise an Auftriebskörpern angeordnet, die an radial äußeren Enden von Armen des Schwimmtragwerks angeordnet sind. Innere Anschlussstellen sind beispielsweise an denjenigen Stellen angeordnet, an denen die sich radial nach außen erstreckenden beispielsweise als Gitterträger ausgebildeten Arme des Schwimmtragwerks an ein inneres Raumtragwerk anschließen, das beispielsweise einen Tetraeder bildet.

Von jedem Anker führen Abspannmittel weg. Von einem Anker gehen zwei schräg verlaufende Abspannmittel vorzugsweise mit gleichem Steigungswinkel und ein vertikales Abspannmittel ab. Diese Ausführungsform hat den weiteren Vorzug, dass das Bauwerk auch gegen Drehung oder Drehschwingungen um eine vertikale Drehachse gesichert wird.

Vorzugsweise gehen von den radial innen liegenden Anschlussstellen des Schwimmtragwerks nur schräg verlaufende Abspannmittel nach unten ab, während von den radial äußeren Anschlussstellen jeweils mindestens ein vertikales Abspannmittel nach unten abgeht. Vorzugsweise gehen von den äußeren Anschlussstellen ausschließlich vertikale Abspannmittel ab. Ist dies der Fall, können an den äußeren Anschlussstellen Klettereinrichtungen vorgesehen sein, die es gestatten, das Bauwerk an den vertikalen Abspannmittel nach oben und nach unten zu verfahren. Die Klettereinrichtungen können Klemmeinrichtungen und Fahreinrichtungen umfassen. Diese sind vorzugsweise hydraulisch betätigt. Bei einer bevorzugten Ausführungsform ist das obere Ende jedes vertikal angeordneten Abspannmittels mit einem eigenen Auftriebskörper verbunden, die das obere Ende des Abspannmittels unabhängig von der Einwirkung des Schwimmtragwerks nach oben gestreckt hält.

Weitere Einzelheiten vorteilhafter Ausführungsformen der Erfindung sind Gegenstand der Beschreibung oder der Zeichnung oder von Ansprüchen. Die Beschreibung beschränkt sich auf wesentliche Aspekte der Erfindung und sonstiger Gegebenheiten. Es zeigen:
**Figur 1** Ein erfindungsgemäßes Schwimmfundament in schematisierter teilweise vereinfachter Seitenansicht.
**Figur 2** das Schwimmfundament nach Figur 1, in vereinfachter Draufsicht,
**Figur 3** einen Anker und Abspannseile des Schwimmfundaments nach Figur 1 und 2,
**Figur 4** eine Klettereinrichtung des Schwimmfundaments in schematisierter Prinzipdarstellung und
**Figur 5** die Errichtung des Schwimmfundaments in zwei verschiedenen Stadien in schematisierter Darstellung.

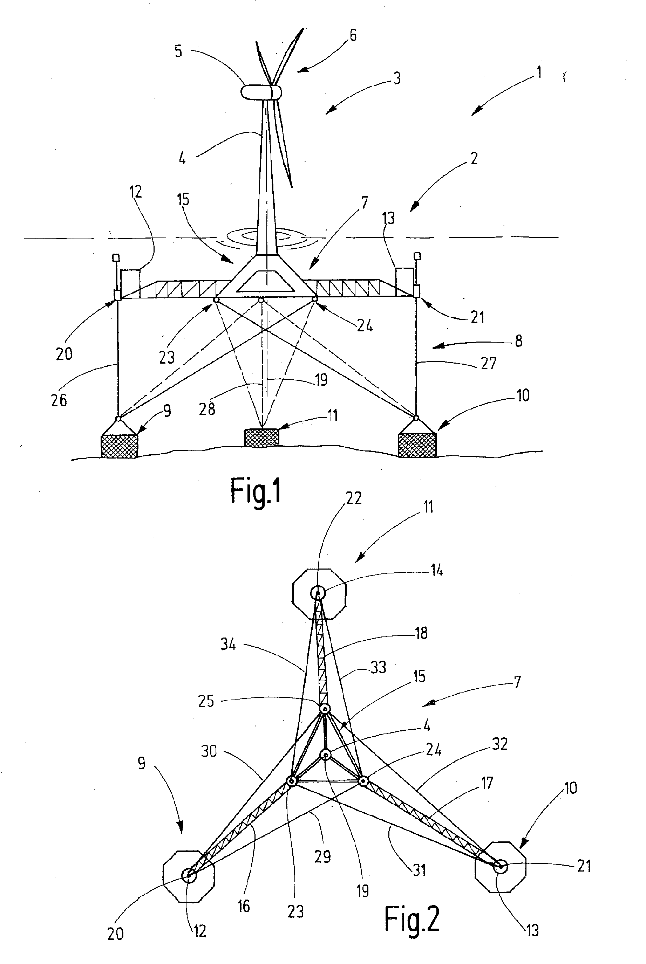

In Figur 1 ist ein seegestütztes Bauwerk 1 veranschaulicht, dass durch eine von einem Schwimmfundament 2 getragene Windkraftanlage 3 mit Turm 4, Gondel 5 und Rotor 6 gebildet wird. Das untere Ende des Turms 4 ist mit einem Schwimmtragwerk 7 verbunden, das zusammen mit Abspannmitteln 8 und Ankern 9, 10, 11 ein Schwimmfundament bildet. Wie aus Figur 2 ersichtlich, sind die Anker 9, 10, 11 am Meeresboden in Horizontalabständen voneinander beabstandet an den Ecken eines vorzugsweise gleichseitigen Dreiecks angeordnet. Die Anker 9, 10, 11 sind vorzugsweise Ballastkörper, deren Gewicht den Auftrieb des Schwimmtragwerks deutlich übersteigt.

Das Schwimmtragwerk 7 ist vorzugsweise eine gemischte Stahl-Beton-Konstruktion. Es umfasst mehrere Auftriebskörper 12, 13, 14, die an der äußeren Peripherie des Schwimmtragwerks 7 angeordnet sind. Das Schwimmtragwerk 7 umfasst beispielsweise radial von einem mittigen Raumtragwerk 15 weg gerichtete, in Gebrauch etwa horizontale Arme 16, 17, 18, die die Schwimmkörper 12, 13, 14 mit den zum Beispiel tetraederförmigen Raumtragwerk 15 verbinden. Die Arme 16, 17, 18 können als Gitterträger ausgebildet sein, Das Raumtragwerk 15 nimmt an seinem oberen Ende den Mast 4 auf. Diese Stelle markiert das Zentrum 19 des Schwimmtragwerks 7.

Radial außen in, an, unter oder unmittelbar neben den Auftriebskörpern 12, 13, 14 sind radial äußere Anschlussstellen 20, 21, 22 angeordnet, an denen Abspannmittel 8 gefasst sind. Das Schwimmtragwerk 7 weist weitere Anschlussstellen 23, 24, 25 auf, die radial etwas weiter innen angeordnet sein können. Zum Beispiel sind sie unterhalb der Anschlussstellen der Arme 16, 17, 18 an das Raumtragwerk 15 angeordnet. Die Anschlussstellen 23, 24, 25 können aber auch radial weiter außen und im äußersten Falle auch radial ganz außen angeordnet sein. Beispielsweise kann die Anschlussstelle 23 unmittelbar an der Anschlussstelle 20 angeordnet oder mit dieser vereinigt sein. Entsprechendes gilt für die anderen Anschlussstellen.

Die Abspannmittel 8 umfassen vertikal und schräg angeordnete Zugmittel. Im vorliegenden Ausführungsbeispiel handelt es sich um Stahlseile. Von jeder radial äußeren Anschlussstelle 20, 21, 22 erstreckt sich ein vertikales Stahlseil 26, 27, 28 zu dem unmittelbar darunter liegenden Anker 19, 11. Die vertikalen Abspannseile 26, 27, 28 halten das Schwimmfundament 7 gegen seinen Auftrieb unter der Meeresoberfläche. Anstelle der Stahlseile können aber auch andere geeignete Zugmittel, z.B. Ketten eingesetzt werden.

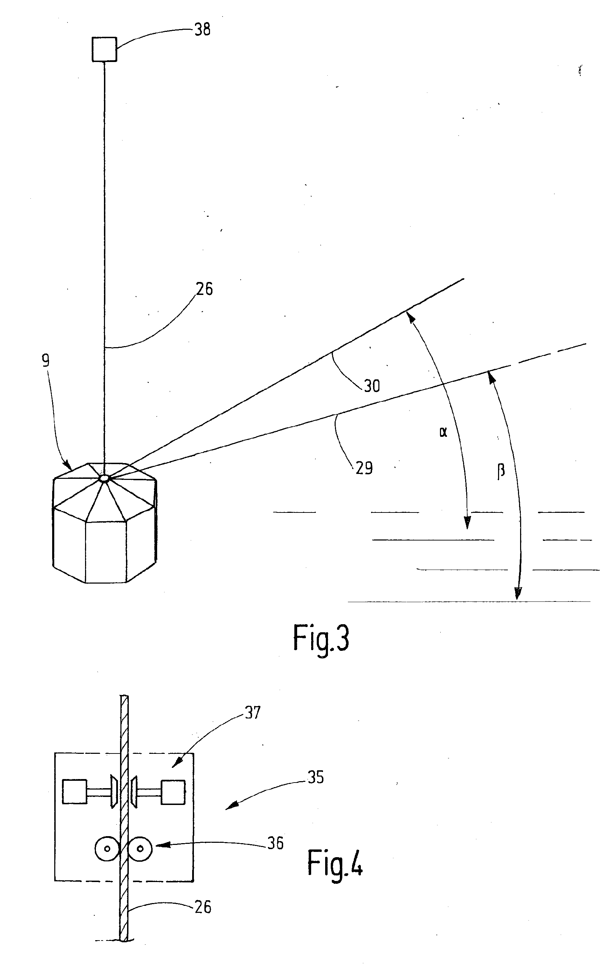

Von dem Anker 9 erstrecken sich mindestens ein vorzugsweise aber mehrere, zum Beispiel zwei Spannseile 29, 30 zu dem radial innen liegenden, aus Sicht des Ankers 9 jedoch fern liegenden Anschlussstellen 24, 25. Diese liegen von dem Anker 9 aus gesehen jenseits des Zentrums 19. Wie Figur 3 zeigt, schließen die beiden Spannseile 29, 30 mit dem Meeresboden jeweils einen Steigungswinkel α, β ein, wobei die beiden Steigungswinkel α und β untereinander gleich sind. Außerdem schließen die Spannseile 29, 30 miteinander einen spitzen Winkel ein.

In ähnlicher Weise gehen von dem Anker 10 zwei Abspannseile 31, 32 zu den Anschlussstellen 23 und 25, die aus Sicht des Ankers 10 jenseits des Zentrums 19 liegen. Von dem Anker 11 gehen zwei Spannseile 33, 34 zu den Anschlussstellen 23, 24, die aus Sicht des Ankers 11 wiederum jenseits des Zentrums 19 liegen.

Mit dem vorgestellten Konzept ergibt sich bei geringer Aufstellfläche des Schwimmfundaments 2 eine hohe Standsicherheit und Tragfähigkeit. An dem Rotor angreifende Windlasten führen zur Einleitung eines Moments in das Schwimmfundament 7. Dieses ist durch die schräg verlaufenden Spannseilen 29 bis 34 dabei so geführt, dass der Auftrieb der Auftriebskörper 12, 13, 14 diesen auf das Schwimmtragwerk 7 einwirkende Moment sehr wirksam entgegenwirkt.

Die Anker 19, 11 sind vorzugsweise Schwergewichtsanker. Sie bestehen aus einem gegebenenfalls stahlumgriffenen oder stahlverstärkten Betonkörper. Bei einer bevorzugten Ausführungsform wird der Betonkörper aus Meereskies mit Seewasser als Anmachwasser vor Ort hergestellt. Die von den Ankern 19, 11 aufgebrachte Gewichtskraft übersteigt den Auftrieb des Schwimmtragwerks 7 bei weitem. Die Spannseile 26, 27, 28 übertragen die notwendige Abspannkraft, um das Schwimmtragwerk 7 unter Wasser zu halten. Die schrägen Abspannseile 29 bis 34 verhindern ein Schwanken des Bauwerks. Die Anschlussstellen 23, 24, 25 sind vorzugsweise passive Anschlussstellen, an denen die Abspannseile 29 bis 34 axial fest angeschlossen sind. Sie können jedoch mit Justageeinrichtungen versehen sein, um Seile, wie gewünscht, zu spannen.

Vorzugsweise sind die äußeren Anschlussstellen 20, 21, 22, die zur Aufnahme der vertikalen Abspannseile 26, 27, 28 vorgesehen sind, anders ausgebildet. Sie können mit einer Klettervorrichtung versehen sein, wie sie schematisch in Figur 4 in Gestalt der Klettervorrichtung 35 dargestellt ist. Die Klettervorrichtung 35 kann dazu dienen, die Vertikalposition der jeweiligen Anschlussstelle 20, 21, 22 an dem jeweiligen Seil 26, 27, 28 zu verstellen. Die Klettervorrichtung 35 enthält vorzugsweise Mittel 26 zum Verfahren der Anschlussstelle an dem Abspannseil 26 sowie Mittel 37 zum Bremsen und Festhalten einer gewünschten Vertikalposition. Die Verfahrmittel 36 können beispielsweise durch zwei oder mehrere, das Abspannseil 26 zwischen einander klemmende Rollen sein, von denen mindestens eine angetrieben ist. Das Klemmmittel 37 kann zwei oder mehrere Bremsbacken umfassen, die durch geeignete Betätigungsmittel, wie beispielsweise Hydraulikzylinder gegen das Abspannseil 26 gespannt werden können, um dieses zwischen einander festzuklemmen.

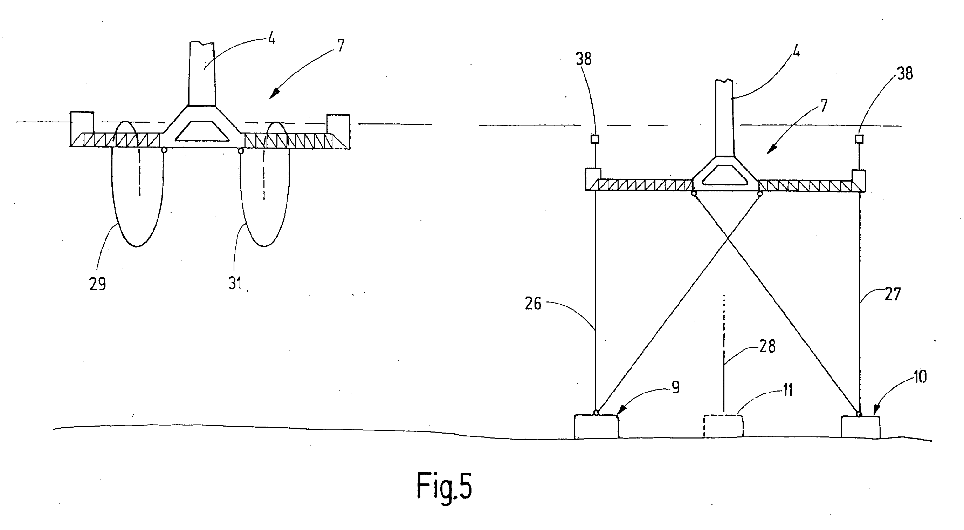

Das insoweit geschriebene Schwimmfundament 2 lässt sich auf einfache Weise errichten:
Zunächst wird das vormontierte Schwimmtragwerk 7, wie es in Figur 5 links angedeutet ist, zum Beispiel mittels eines Schleppers an den gewünschten Aufbauort geschleppt. Es werden dann die Anker 19, 11 errichtet. An den Ankern 19, 11 können dann zunächst die vertikalen Abspannseile 26 bis 28 befestigt werden. Diese können an ihrem jeweiligen oberen Ende mit einem Schwimmkörper 38 verbunden sein, wobei die Länge des vertikalen Abspannseils 26 bis 28 so bemessen ist, dass der Schwimmkörper 38 unterhalb der Wasseroberfläche steht. Der Schwimmkörper 38 ist vorzugsweise relativ klein, wobei er dazu geeignet ist, zumindest gerade eben, das Gewicht des Abspannseils 26 bis 28 zu tragen.

An dem Schwimmtragwerk 7 können die schräg verlaufenden Abspannseile bereits angeschlossen sein. Ihre den Ankern 19, 11 zugeordneten Enden können noch an dem Schwimmtragwerk 7 aufgehängt sein, wie in Figur 5 links schematisch angedeutet ist.

Ist das Schwimmtragwerk 7 am Einbauort angekommen, werden die vertikalen Abspannseile 26, 27, 28 mit den Klettervorrichtungen 35, d.h. den Anschlussstellen 20, 21, 22 verbunden. Mittels der Klettervorrichtungen 35 kann das Schwimmtragwerk 7 nun abgesenkt werden. Es kann dabei zunächst so tief nach unten gefahren werden, dass die schräg verlaufenden Abspannseile bequem an den Ankern 9, 10, 11 zu befestigen sind. Sodann kann das Schwimmtragwerk 7 so weit wieder nach oben gefahren werden, dass auch die schräg verlaufenden Abspannseile straff gespannt gehalten sind.

Das erfindungsgemäße Schwimmfundament 2 weist Anker 12, 11 auf, die vertikal unterhalb von Anschlussstellen 20, 21, 22 eines Schwimmtragwerks 7 angeordnet sind. Von jedem Anker 19, 11 erstrecken sich Abspannseile 26, 27, 28 vertikal nach oben zu entsprechenden Anschlussstellen und anderer Abspannseile 29 bis 34 schräg nach oben zu jenseits des Zentrums 19 liegenden Anschlussstellen. Dies ergibt ein standsicheres tragfestes Schwimmfundament.

### Bezugszeichen

- 1: Bauwerk
- 2: Schwimmfundament
- 3: Windkraftanlage
- 4: Turm
- 5: Gondel
- 6: Rotor
- 7: Schwimmtragwerk
- 8: Abspannmittel
- 9, 10, 11: Anker
- 12, 13, 14: Auftriebskörper
- 15: Raumtragwerk
- 16, 17, 18: Arme
- 19: Zentrum
- 20 - 25: Anschlussstellen
- 26 - 28: vertikale Abspannseile
- 29, 30: Abspannseile
- α, β: Steigungswinkel
- 31 - 34: Abspannseile
- 35: Klettervorrichtung
- 36: Verfahrmittel
- 37: Klemmmittel

## Patentansprüche

1. Schwimmfundament (2) für seegestützte Windkraftanlagen mit
- einem Schwimmtragwerk (7) unter der Meeresoberfläche, das Auftriebskörper (12, 13, 14) an radial äußeren Positionen und mehrere horizontal voneinander beabstandete Anschlussstellen (20-25) aufweist, wobei Anschlussstellen (20-25) sowohl bei den Auftriebskörpern (12, 13, 14) als auch gegenüber den Auftriebskörpern (12, 13, 14) an radial weiter innen liegenden Positionen des Schwimmtragwerks (7) vorgesehen sind,
- mehreren Ankern (9, 10, 11), die ortsfest angeordnet und mindestens horizontal voneinander beabstandet sind,
- jeweils zwei Abspannmitteln (29, 30; 31, 32; 33, 34) zwischen einem Anker (9, 10, 11) und zwei gegenüber den Auftriebskörpern (12, 13, 14) an radial weiter innen liegenden Positionen des Schwimmtragwerks (7) angeordneten Anschlussstellen (23, 24, 25), wobei die zwei Abspannmittel (29, 30; 31, 32; 33, 34) an der durch das Zentrum und dem davon aufragenden Turm der Windkraftanlage gebildeten Mittelachse (19) vorbeigeführt sind und sich die Mittelachse (19) zwischen den zwei Abspannmitteln (29, 30; 31, 32; 33, 34) befindet,
und
- jeweils wenigstens ein vertikal orientiertes Abspannmittel (26, 27, 28) zwischen einem Anker (9, 10, 11) und einer Anschlussstelle (20, 21, 22) bei einem Auftriebskörper (12, 13, 14), so dass das Bauwerk auch gegen Drehung oder Drehschwingungen um eine vertikale Drehachse gesichert ist.

2. Schwimmfundament nach Anspruch 1, **dadurch gekennzeichnet, dass** die Anschlussstellen (20-25) an Ecken eines Polygons angeordnet sind.

3. Schwimmfundament nach Anspruch 1, **dadurch gekennzeichnet, dass** beide Abspannmittel (29, 30) mit übereinstimmenden Steigungswinkeln (a, ß) zu radial innen liegenden Anschlussstellen (24, 25) führen.

4. Schwimmfundament nach Anspruch 1, **dadurch gekennzeichnet, dass** die zwei Abspannmittel (26, 29) unterschiedliche Steigungswinkel aufweisen.

5. Schwimmfundament nach Anspruch 1, **dadurch gekennzeichnet, dass** jedes vertikal orientierte Abspannmittel (26, 27, 28) ein oberes Ende aufweist, das mit einem das Abspannmittel (26, 27, 28) tragenden Auftriebskörper (38) verbindbar ist.

## Claims

1. Floating foundation (2) for sea-based wind power plants, having
- a floating framework (7) under the sea, comprising buoyancy elements (12, 13, 14) situated radially at the outer positions, and a plurality of horizontally spaced-apart connection points (20-25), whereby connection points (20-25) are intended , both for the buoyancy elements (12, 13, 14) and, at positions situated radially further inward of the floating framework (7), facing the buoyancy elements (12, 13, 14).
- a plurality of anchors (9, 10, 11), arranged in a fixed position and at least horizontally spaced-apart from each other,
- two bracing elements each (29, 30; 31, 32; 33, 34) between one anchor (9, 10, 11) and two connection points (23, 24, 25) which connection points are arranged opposite the buoyancy elements (12, 13, 14) at positions situated radially further inward of the floating framework (7), whereby said two bracing elements (29, 30; 31, 32; 33, 34) extend beyond the central axis (19) formed by the centre and the rising tower of the wind power plant, and whereby the central axis (19) is situated between the two bracing elements (29, 30; 31, 32; 33, 34),
and
- at least one vertically positioned bracing element each (26, 27, 28) between one anchor (9, 10, 11) and one connection point (20, 21, 22) at one buoyancy element (12, 13, 14), so that the built structure is also secured against rotation or rotational vibrations around a vertical axis of rotation.

2. Floating foundation according to claim 1, **characterized in that** the connection points (20-25) are arranged at the corners of a polygon.

3. Floating foundation according to claim 1, **characterized in that** both bracing elements (29, 30) having matching gradient angles (a, ß) lead to radially inwardly situated connection points (24, 25).

4. Floating foundation according to claim 1, **characterized in that** the two bracing elements (26, 29) have different gradient angles.

5. Floating foundation according to claim 1, **characterized in that** each vertically positioned bracing element (26, 27, 28) has an upper end capable of being connected to a buoyancy element (38) which bears the said bracing element (26, 27, 28).

## Revendications

1. Fondation flottante (2) pour éoliennes offshore, comprenant
- une construction portante flottante (7) sous le niveau de la mer, qui présente des flotteurs (12, 13, 14) à des positions radialement extérieures et plusieurs points de raccordement (20 - 25) espacés les uns des autres horizontalement, des points de raccordement (20 - 25) étant prévus aussi bien sur les flotteurs (12, 13, 14) qu'en face des flotteurs (12, 13, 14) à des positions radialement plus intérieures de la construction portante flottante (7),
- plusieurs ancrages (9, 10, 11) qui sont disposés en position fixe et espacés les uns des autres au moins horizontalement,
- chaque fois deux moyens de haubanage (29, 30 ; 31, 32 ; 33, 34) entre un ancrage (9, 10, 11) et deux points de raccordement (23, 24, 25) disposés en face des flotteurs (12, 13, 14) à des positions radialement plus intérieures de la construction portante flottante (7), les deux moyens de haubanage (29, 30 ; 31, 32 ; 33, 34) passant devant l'axe médian (19) formé par le centre et la tour de l'éolienne qui se dresse depuis celui-ci et l'axe médian (19) se trouvant entre les deux moyens de haubanage (29, 30 ; 31, 32 ; 33, 34),
et
- chaque fois au moins un moyen de haubanage (26, 27, 28) orienté verticalement entre un ancrage (9, 10, 11) et un point de raccordement (20, 21, 22) sur un flotteur (12, 13, 14), de sorte que l'ouvrage est également protégé contre une rotation ou des oscillations rotatives autour d'un axe de rotation vertical.

2. Fondation flottante selon la revendication 1, **caractérisée en ce que** les points de raccordement (20 - 25) sont disposés aux sommets d'un polygone.

3. Fondation flottante selon la revendication 1, **caractérisée en ce que** les deux moyens de haubanage (29, 30) conduisent aux points de raccordement (24, 25) radialement intérieurs avec des angles d'inclinaison (α, β) égaux.

4. Fondation flottante selon la revendication 1, **caractérisée en ce que** les deux moyens de haubanage (26, 29) présentent des angles d'inclinaison différents.

5. Fondation flottante selon la revendication 1, **caractérisée en ce que** chaque moyen de haubanage (26, 27, 28) orienté verticalement présente une extrémité supérieure qui peut être reliée à un flotteur (38) portant le moyen de haubanage (26, 27, 28).
